(19) Europäisches Patentamt
European Patent Office
Office européen des brevets

(11) EP 3 227 544 B1

(12) **EUROPEAN PATENT SPECIFICATION**

(45) Date of publication and mention of the grant of the patent:
**28.11.2018 Bulletin 2018/48**

(21) Application number: **15823776.8**

(22) Date of filing: **04.12.2015**

(51) Int Cl.:
*F02D 41/00* *(2006.01)*    *G01M 15/10* *(2006.01)*

(86) International application number:
**PCT/IB2015/059370**

(87) International publication number:
**WO 2016/088097 (09.06.2016 Gazette 2016/23)**

(54) **A LEAKAGE DETECTION SYSTEM OF A LOW PRESSURE EGR CIRCUIT OF AN INTERNAL COMBUSTION ENGINE**

LECKPRÜFSYSTEM EINER NIEDRIGDRUCK-AGR-LEITUNG EINER BRENNKRAFTMACHINE

SYSTEME DE DETECTION DE FUITE D'UN CIRCUIT EGR BASSE PRESSION D'UN MOTEUR À COMBUSTION INTERNE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **04.12.2014 IT TO20141013**

(43) Date of publication of application:
**11.10.2017 Bulletin 2017/41**

(73) Proprietor: **FPT Industrial S.p.A.**
**10156 Torino (IT)**

(72) Inventors:
• **DELL'UNTO, Francesco**
**I-10136 Torino (IT)**
• **ODELLO, Fabio**
**I-10093 Collegno (IT)**
• **POZZI, Ugo**
**I-10141 Torino (IT)**

(74) Representative: **Fiume, Orazio et al**
**Studio Torta S.p.A.**
**Via Viotti, 9**
**10121 Torino (IT)**

(56) References cited:
**EP-A1- 2 728 150       WO-A1-2008/109306**
**DE-A1-102010 060 330   US-B1- 6 850 834**

**Description**

Sphere of application of the invention

The present invention relates to the field of internal combustion engines fitted with at least one recirculation duct of exhaust gases at low pressure and more precisely with a detection system of a leakage of said low-pressure EGR recirculation circuit.

Prior art

Emission regulations to which internal combustion engines are subject provide for increasingly strict emission limits and increasingly challenging validation cycles. One of the pollutants with the greatest impact which regulations require is kept under control is composed of Nitrogen Oxides (NOx): EGR (Exhaust Gas Recirculation) is the system, which, in most applications, is used to reduce this pollutant.

A possible fault consists of the entrance of fresh air in the low pressure EGR duct.

In other words, instead of exhaust gas being recirculated, fresh air is introduced. As a result, on the one hand performance, in terms of power/torque delivered by the internal combustion engine, improves, but on the other, it is no longer possible to adequately control/limit the NOx emissions.

This type of fault may occur essentially for two reasons: accidental rupture of the low pressure EGR duct or voluntary opening thereof by the driver, precisely to increase the performance of the internal combustion engine.

Document EP 2 728 150 A1 discloses a leakage/fault detection system of a low pressure EGR circuit of an IC engine according to the preamble of claim 1.

Summary of the invention

Consequently the aim of the present invention is to propose a system able to monitor the possible entry of fresh air into/through the low pressure EGR duct of an internal combustion engine both of the aspirated and supercharged type.

The present invention relates to a leakage detection system of a low pressure EGR recirculation line of an internal combustion engine.

The basic idea of the present invention is to calculate the lambda error values, namely the errors between the lambda measured at the exhaust line and the theoretical lambda, to calculate the flow rates of the recirculated EGR and to calculate a regression line based on said EGR flow rates and lambda error values and to signal an error as a function of an angular coefficient value of said regression line.

The present invention also relates to an internal combustion engine implementing the above system, a vehicle, or a fixed apparatus comprising the above-mentioned internal combustion engine.

A further purpose of the present invention is a leakage detection system of a low pressure EGR circuit of an internal combustion engine,

The claims describe preferred variants of the invention, forming an integral part of the present description.

Brief description of the figures

Further purposes and advantages of the present invention will be clear from the detailed description below of an example of embodiment thereof (and of its variants) and the appended drawings, provided merely by way of a non-limiting example, wherein:

Figure 1 shows a schematic diagram of an internal combustion engine comprising a low pressure EGR duct implementing the system of the present invention;
Figure 2 shows an example of calculation of a regression line on two parameters on which the method of the present invention is based.

Identical reference numerals and letters in the drawings refer to the same elements or components.
In the present description the term "second" component does not imply the presence of a "first" component. These terms are in fact used only for clarity and are not intended as limiting.

Detailed description of embodiments

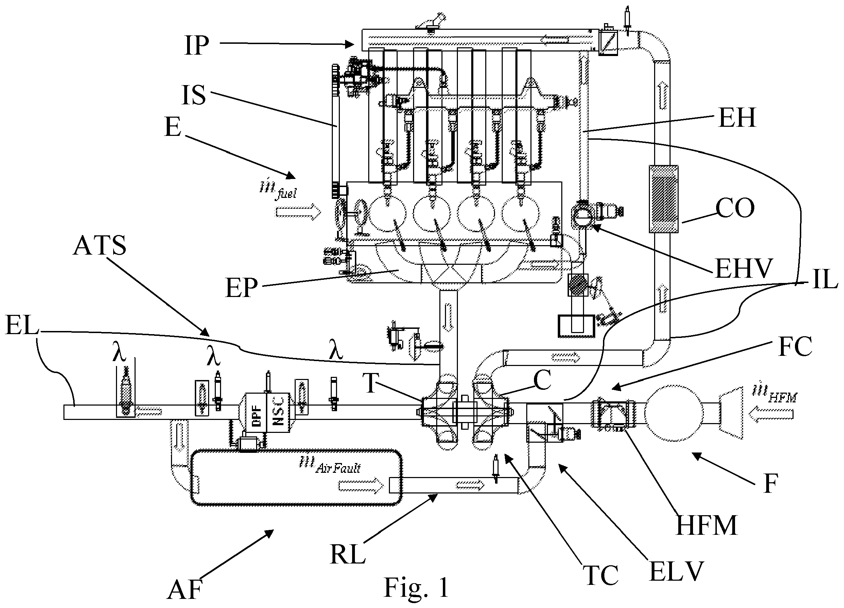

With reference to Figure 1, an internal combustion engine E, preferably a diesel cycle, with any number of cylinders, for example 4 or 6, is fitted with an intake manifold IP connected to the output of the compressor C of a turbocharger group TC. The intake of said compressor C is connected by the duct FC to the suction filter box F.

The duct RL connects a point of the low pressure exhaust line, i.e. almost at ambient pressure, and a point of the suction line, downstream of the low pressure suction filter F, i.e. almost at ambient pressure.

Between the suction filter box F and the connection point between the duct RL and the duct FC an air mass metering device HFM, generally present on internal combustion engines, is placed.

As will be clearer below, the presence of the turbocompressor group is optional.

The turbine T of the same group TC has the input connected with the exhaust manifold EP and the output connected with a post-treatment system of exhaust gases ATS (DPF, NCI).

In the case of a supercharged engine, the low pressure EGR duct RL is connected between the output of the turbine T or one or more of the components of the exhaust gas treatment system (ATS) and the input of the compressor C. A valve ELV is arranged at any point of such duct RL, for example at the outlet point into the duct FC, to adjust the amount of exhaust gas to be recirculated.

Therefore, for the purposes of the present invention, the low pressure EGR duct is also understood as the single EGR duct of an aspirated engine, i.e. devoid of supercharger groups TC.

The concept of low pressure, in this context, is clear in relation to the fact that the bleed of the exhaust gas is operated almost at ambient pressure or in any case downstream of a (final) possible turbine T (according to the outflow of the exhaust gases).

The internal combustion engine, if supercharged, can be optionally fitted with a high pressure EH EGR duct, connected between the exhaust manifold EP and the intake manifold IP, therefore upstream of the entrance of the turbine T and downstream of the output of the compressor C. In figure 1 the low pressure duct RL is shown broken off by the superimposition of an AF lock bearing the label $\dot{m}_{AirFault}$ which ideally represents a loss of airtightness of the low pressure EGR duct RL which allows the entrance of fresh air into the engine E through the ELV low pressure valve EGR. This fresh air is not counted by the air mass metering device HFM.

As will be clarified below, the entrance of fresh air can also take place along the duct FC between the air mass metering device HFM and the input of the compressor C if present, or, at any point downstream of the air mass metering device HFM in the case in which the engine is not equipped with any compressor.

The engine E is also fitted with a fuel injection system IS which comprises means of measuring or estimating the amount of fuel injected into the cylinders $\dot{m}_{FUEL}$.

In addition, the engine is fitted with at least one lambda ($\lambda$) sensor or a NOx sensor on the exhaust line, by means of which it is possible to measure or estimate the relationship between air (fresh) air and fuel fed into the internal combustion engine E.

Figure 1 shows several lambda sensors, given that in the application example shown, they are arranged on the exhaust line, i.e. along the ATS, of the engine. For the purposes of the present invention at least one lambda and/or NOx sensor is sufficient to implement the invention.

Note that the symbol $\lambda$ (lambda) indicates the lambda or NOx sensor itself.

According to the present invention, step 1, a lambda value is acquired at the exhaust, for example by means of said lambda and/or NOx sensor.

In addition, - in step 2 - a theoretical value of lambda $\lambda_{exp}$ is calculated by the means for measuring or estimating the amount of fresh air aspirated $\dot{m}_{HFM}$ and the fuel injected $\dot{m}_{FUEL}$ :

$$\lambda_{\exp} = \frac{\dot{m}_{HFM} \, / \, \dot{m}_{FUEL}}{STK}$$

STK is a variable coefficient which generally amounts to 14.6 for diesel, 13.5 for biodiesel, 10.1 for ethanol and 17.4 for methane.

Subsequently, - in step 3 - an error between the lambda measured $\lambda_{measured}$ on the exhaust line by said sensor $\lambda$ and/or NOx and the theoretical lambda $\lambda_{exp}$ is estimated:

$$\lambda_{err} = \lambda_{measured} - \lambda_{\exp}$$

In the prior art, small values of $\lambda_{err}$, below 10%, may be considered admissible. However, the invention must be considered extended to the more general case of engines which require stricter operating tolerances or which allow broader operating tolerances.

In step 4 - the recirculated low pressure EGR $\dot{m}_{EGR}$ flow rate is calculated.

The low pressure flow rate EGR $\dot{m}_{EGR}$ can be calculated or estimated in any way.

A preferred method for calculating the low pressure flow rate EGR $\dot{m}_{EGR}$, when simultaneous high pressure recirculation is not provided for, involves the step of subtracting from the overall charge entering the engine $\dot{m}_a$ the flow rate of fresh air measured at aspiration $\dot{m}_{HFM}$ by means of said air mass metering device HFM, where the overall charge entering the engine $\dot{m}_a$ is a function of engine revolutions, displacement, pressure and temperature measured in said intake line and preferably at the intake manifold IP.

An example of such an estimate is given in US2012138027 paragraphs [0034] and [0035].

Conversely, when simultaneous high pressure recirculation is provided for, then a preferred method for calculating the low pressure flow rate EGR $\dot{m}_{EGR,LP}$ provides for the step of subtracting from the total charge entering the engine $\dot{m}_a$ thee high-pressure flow rate EGR $\dot{m}_{EGR,HP}$ appropriately estimated and the flow of fresh air measured at the intake $\dot{m}_{HFM}$ by means of said air mass metering device HFM, where the overall charge entering the engine $\dot{m}_a$ is a function of engine revolutions, displacement, pressure and temperature measured in said intake line and preferably at the intake manifold IP.

The estimation of the high-pressure EGR flow rate $\dot{m}_{EGR,HP}$ may, for example, be made on the basis of the opening of the EGR high pressure valve, preferably the EGR valve is modelled as a nozzle from which the recirculated gas flows so as to calculate an outflow area value to correct the flow rate of recirculated gas according to a flow pattern. An example of such technique is given in EP2728150.

Once $\lambda_{err}$ and $\dot{m}_{EGR}$ are calculated- in step 5 - the correlation between said error $\lambda_{err}$ and the low pressure EGR flow rate $\dot{m}_{EGR}$ is calculated by calculating a regression line $\hat{y} = a + bx$.

Preferably, for the calculation of the regression line, the absolute value of the lambda error $\lambda_{err}$ is used, making sure that the conditions of pressure or negative pressure in the low-pressure EGR circuit have lambda error values of opposite signs but identical in absolute value.

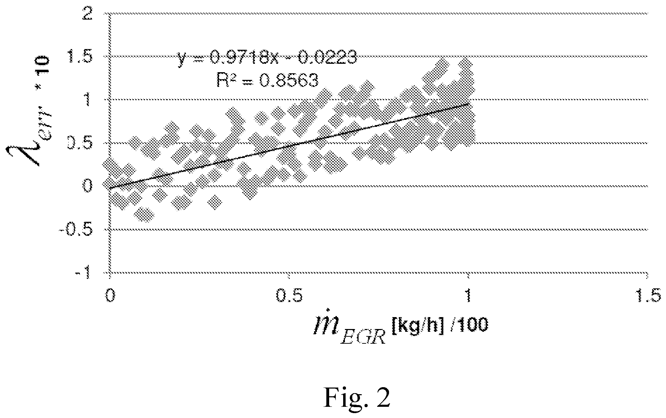

An example of a regression line is shown in figure 2.

In step 6 - a leakage/fault of the low pressure EGR circuit is signalled if the angular coefficient b of the regression line is greater in absolute value than a first predefined positive threshold $b_{max}$.

Preferably, such threshold $b_{max}$ is set to 0.01 h / kg.

The coefficients of the aforementioned regression line are:

$$a = \frac{(\sum Y)(\sum X^2) - (\sum X)(\sum XY)}{n(\sum X^2) - (\sum X)^2} \qquad b = \frac{n(\sum XY) - (\sum X)(\sum Y)}{n(\sum X^2) - (\sum X)^2}$$

Where X is $\dot{m}_{EGR}$ and Y is $\lambda_{err}$.

It is preferable that the pairs of values X and Y are "sufficiently" homologous, in the sense that they are not affected by appreciable delays of measurement or estimation with respect to the real physical quantities to be observed, or at least that such delays are of a similar size for X and Y. For this reason, according to a preferred variant of the invention, account is taken of the calculation delay on the two threads, one relative to the calculation of the EGR low pressure flow rate and the other to the error on lambda, so as to properly match the pairs of values. Alternatively, it is preferable to acquire the X and Y values when they are stationary or stabilized over time, so that any delays of one signal with respect to the other are irrelevant for purposes of this method. The summations $\sum$ reported above are performed on the set of samples X and Y deemed representative in the light of the criteria described above.

It is obvious that the above steps 1, 2, and 3 must be performed in sequence. The fourth step may be performed before, during or after performing the steps 1, 2, and 3. Steps 5 and 6, instead, may only be carried out after performing steps 1, 2, 3 and 4.

According to a preferred variant of the invention, the performance of the above steps 1 - 6 or at least of step 6 can be inhibited depending on the outcome of a preliminary verification:

- CH0: it is seen that no errors are stored in the processing unit ECU relative to the sensors and actuators involved in the present method, for example the temperature or pressure sensor on the intake manifold IP, or the air mass metering device HFM, or the actuator of the low pressure EGR valve, etc.

According to another preferred variant of the invention at least one of the following steps is performed before the aforementioned step 6.

These are basically checks that if not passed, prevent the performance of step 6, i.e. the signalling of a fault.

- CH1: The Pearson correlation index R2, defined as the covariance of the two variables X (low pressure EGR flow rate) and Y (error lambda) divided by the product of the relative standard deviations is calculated; it can be written as

$$\frac{\sum(X-\bar{X})(Y-\bar{Y})}{\sqrt{\sum(X-\bar{X})^2\sum(Y-\bar{Y})^2}}$$

and after such calculation R2 is checked to be greater than a second predefined minimum threshold R_min2, for example 0.8. The summations $\sum$ shown above are carried out on the same set of samples X and Y used for the calculation of the coefficients of the regression line already described.

- (CH2) the total recirculated low pressure mass EGR M_EGR is calculated starting from the last engine start and during the execution of the present method and it is checked that such total mass M_EGR is greater than a third predefined threshold (M_EGR_min), for example 10kg.
- CH3: in order to ensure sufficient accuracy of the method, it is preferable to ensure that it applies to an appropriate database, so that the mean squared deviation of the EGR low pressure flow rate is calculated during the execution of this method $\sigma(\dot{m}_{EGR,LP})$ and such mean squared deviation $\sigma(\dot{m}_{EGR,LP})$ is checked as greater than a fourth predefined threshold $\sigma(\dot{m}_{EGR,LP})$ _min which for example may be 50kg / h.

The checks CH2 and CH3 inhibit only the performance of step 6.

According to a preferred variant of the invention each of the summations $\sum$ shown so far may be replaced by

an integral:    $\int_{t1}^{t2}(V)\,dt$    where V corresponds to X, Y, XY, $X^2$, etc and the time interval t2 - t1 corresponds to the number n of samples of the variables X and Y considered for the summations $\sum$ .

The implementation of integrals makes it possible to manage the calculation avoiding the burden of storing large data buffers.

Thanks to the present invention it is possible to continuously detect any leaks/ faults in the low-pressure EGR recirculation circuit.

The method/system refers to flow estimates/calculations if a single engine cycle is concerned or to general flows if several cycles are considered. In other words the concept remains unchanged.

Such monitoring may be performed by a vehicle control unit or the engine control unit ECU. Consequently, the present invention may advantageously be implemented by a computer programme which comprises coding means for the performance of one or more steps of the method, when this programme is run on a computer. It is therefore understood that the scope of protection extends to said computer program and furthermore to computer-readable media that comprise a recorded message, said computer-readable media comprising program coding means for the implementation of one or more steps of the method when said program is run on a computer.

Embodiment variants may be made to the non-limiting example described, while remaining within the scope of protection of the present invention, comprising all the equivalent embodiments for a person skilled in the art.

For example, the detection of one of the possible types of fault may determine the signalling of an anomaly by an indicator in the dashboard of the vehicle and/or may determine the activation of a recovery procedure that limits the maximum torque and/or the maximum power delivered by the internal combustion engine E or the maximum speed of the vehicle on which the present invention is implemented.

From the above description a person skilled in the art may make the object of the invention without introducing any further construction details. The elements and features shown in the various preferred embodiments, including the drawings, may be combined while remaining within the scope of protection of the present application. The description in the chapter related to the state of the art is merely for a better understanding of the invention and is not a statement of the existence of what is described. Furthermore, unless specifically excluded in the detailed description, the contents of the chapter on the state of the art may be considered in combination with the characteristics of the present invention, forming an integral part of the present invention. None of the characteristics of the different variants is essential, except as indicated in the independent claims, therefore, the individual characteristics of each preferred variant or drawing may be combined with the other variants described.

**Claims**

1.  A leakage/fault detection system of a low pressure EGR circuit (RL) of an internal combustion engine, the internal combustion engine comprising:

      - an intake line (IL) and an exhaust line (EL),
      - first means (HFM) for measuring or estimating a quantity of fresh air ($\dot{m}_{HFM}$) flowing into said intake line (IL)
      - second means for measuring or estimating a quantity of fuel ($\dot{m}_{FUEL}$) injected into the engine (E),
      - third means for measuring or estimating ($\lambda$ and/or NOx), on said exhaust line, adapted to provide a measured value ($\lambda_{measued}$) of an air/fuel ratio supplied to the internal combustion engine (E),

    the system comprising processor means (ECU) configured to interface with the aforesaid first, second and third means for measuring or estimating ($\dot{m}_{HFM}$, $\dot{m}_{FUEL}$, $\lambda_{measured}$) and to perform the following steps

      - (step 1) acquisition of a lambda value measured at the exhaust ($\lambda_{measured}$) through said third means for measuring or estimating ($\lambda$ and/or NOx),
      - (step 2) calculation of a theoretical value ($\lambda_{exp}$) of said air/fuel ratio, calculated based on said measured or estimated quantities of fresh air ($\dot{m}_{HFM}$) and fuel ($\dot{m}_{FUEL}$), **characterised by**,
      - (step 3) calculation of an error ($\lambda_{err}$) between said measured and theoretical values of air/fuel ratio ($\lambda_{measured}$- $\lambda_{exp}$),
      - (step 4) calculation/estimation of a quantity/flow of recirculated low pressure exhaust gas ($\dot{m}_{EGR}$),
      - (step 5) calculation of a linear regression on said quantity of recirculated exhaust gas ($\dot{m}_{EGR}$) and said error ($\lambda_{err}$),
      - (step 6) signalling of a leakage/fault on said low pressure EGR circuit when an angular coefficient (b) of said linear regression exceeds a predefined first positive threshold ($b_{max}$).

2.  System according to claims 1, wherein, in the absence of a simultaneous high pressure recirculation, said flow of recirculated low pressure exhaust gas ($\dot{m}_{EGR,LP}$) is calculated by said processor means (ECU) subtracting from a total charge entering the internal combustion engine ($\dot{m}_a$) said quantity of fresh air ($\dot{m}_{HFM}$) flowing into said intake line (IL), wherein said total charge ($\dot{m}_a$) entering the internal combustion engine is a function of engine revolutions, displacement, pressure and temperature measured in said intake line (IL).

3.  System according to claim 2, wherein, if a simultaneous high pressure recirculation is carried out, said flow of recirculated low pressure exhaust gas ($\dot{m}_{EGR,LP}$) is calculated by said processor means (ECU) subtracting from a total charge entering the internal combustion engine ($\dot{m}_a$) said quantity of fresh air ($\dot{m}_{HFM}$) flowing into said intake line (IL) and a flow of recirculated high pressure exhaust gas ($\dot{m}_{EGR,HP}$), wherein said total charge ($\dot{m}_a$) entering the internal combustion engine is a function of engine revolutions, displacement, pressure and temperature measured in said intake line (IL).

4.  System according to any one of claims 1 - 3, further comprising means for monitoring a state of efficiency in the aforesaid means for measuring or estimating ($\dot{m}_{HFM}$, $\dot{m}_{FUEL}$, $\lambda_{measured}$) and wherein said processor means are further configured to inhibit at least the execution of said signalling step (step 6), when at least one error on one of said means for measuring or estimating is detected.

5.  System according to any one of the preceding claims, wherein said processor means are further configured to perform at least one of the following checks

      - (CH2) checking that a total mass (M_EGR) of recirculated low pressure exhaust gas starting from the last engine start and during the execution of the present method is greater than a third predefined threshold (M_EGR_min);
      - (CH3) checking that a mean squared deviation ($\sigma(\dot{m}_{EGR})$) of said quantity of recirculated low pressure exhaust gas ($\dot{m}_{EGR}$) is greater than a fourth predefined threshold ($\sigma(\dot{m}_{EGR})$_min)

    and configured to inhibit an execution of said signalling step (step 6) when said at least one of said checks (CH2, CH3) is not satisfied.

6.  System according to any one of the preceding claims, wherein said processor means are further configured to perform a step to check that a Pearson correlation index ($R^2$) between the flow of low pressure EGR ($\dot{m}_{EGR,LP}$) and the lambda error ($\lambda_{err}$) is greater than a second predefined minimum threshold (R_min$^2$).

7. Internal combustion engine, in particular a diesel cycle engine, comprising

   - a low pressure EGR circuit (RL),
   - an intake line (IL) and an exhaust line (EL),
   - means (HFM) for measuring or estimating a quantity of fresh air ($\dot{m}_{HFM}$) flowing into said intake line (IL)
   - means for measuring or estimating a quantity of fuel ($\dot{m}_{FUEL}$) injected into the engine (E),
   - means for measuring or estimating ($\lambda$ and/or NOx), on said exhaust line, adapted to provide a first value ($\lambda_{measured}$) of an air/fuel ratio supplied to the internal combustion engine (E),

   **characterised by** comprising a leakage/fault detection system of said low pressure EGR circuit (RL) according to any one of claims 1 to 6.

8. A method for detecting a leakage/fault of a detection system of a low pressure EGR circuit (RL) of an internal combustion engine, the method comprising the following steps

   - (step 1) acquisition of a lambda value measured at the exhaust ($\lambda_{measured}$) through said third measuring or estimating means ($\lambda$ and/or NOx),
   - (step 2) calculation of a theoretical value ($\lambda_{exp}$) of said air/fuel ratio, calculated based on said measured or estimated quantity of fresh air ($\dot{m}_{HFM}$) and fuel ($\dot{m}_{FUEL}$),
   - (step 3) calculation of an error ($\lambda_{err}$) between said measured and theoretical value of air/fuel ratio ($\lambda_{measured} - \lambda_{exp}$),
   - (step 4) calculation/estimation of a quantity/flow of recirculated low pressure exhaust gas ($\dot{m}_{EGR}$),
   - (step 5) calculation of linear regression on said quantity of recirculated exhaust gas ($\dot{m}_{EGR}$) and said error ($\lambda_{err}$),
   - (step 6) signalling of a leakage/fault on said low pressure EGR circuit when an angular coefficient (b) of said linear regression exceeds a predefined first positive threshold ($b_{max}$) .

9. Method according to claim 8, wherein, in the absence of simultaneous high pressure recirculation, said quantity of recirculated low pressure exhaust gas ($\dot{m}_{EGR}$) is calculated by subtracting from a total charge entering the internal combustion engine ($\dot{m}_a$) said quantity of fresh air ($\dot{m}_{HFM}$) flowing into said intake line (IL), wherein said total charge ($\dot{m}_a$) entering the internal combustion engine is a function of engine revolutions, displacement, pressure and temperature measured in said intake line (IL).

10. Method according to claim 9, wherein, if a simultaneous high pressure recirculation is carried out, said flow of recirculated low pressure exhaust gas ($\dot{m}_{EGR,LP}$) is calculated by said processor means (ECU) subtracting from a total charge entering the internal combustion engine ($\dot{m}_a$) said quantity of fresh air ($\dot{m}_{HFM}$) flowing into said intake line (IL) and a flow of recirculated high pressure exhaust gas ($\dot{m}_{EGR,HP}$), wherein said total charge ($\dot{m}_a$) entering the internal combustion engine is a function of engine revolutions, displacement, pressure and temperature measured in said intake line (IL).

11. Method according to any one of claims 8 - 10, further comprising a step of monitoring a state of efficiency in the aforesaid means for measuring or estimating ($\dot{m}_{HFM}$, $\dot{m}_{FUEL}$, $\lambda_{measured}$) and of inhibiting at least the execution of said signalling step (step 6), when at least one error on one of said means for measuring or estimating is detected.

12. Method according to any one of the preceding claims 8 - 11, further comprising at least one of the following checks

   - (CH2) checking that a total recirculated low pressure mass (M_EGR) starting from the last engine start and during the execution of the present method is greater than a third predefined threshold (M_EGR_min);
   - (CH3) checking that a mean squared deviation ($\sigma(\dot{m}_{EGR})$) of said quantity of recirculated low pressure exhaust gas ($\dot{m}_{EGR}$) is greater than a fourth predefined threshold ($\sigma(\dot{m}_{EGR})$_min)

   and a step to inhibit an execution of said step for calculation of said linear regression (step 5) and/or signalling step (step 6) when said at least one of said checks is not satisfied.

13. Method according to any one of the preceding claims 8 - 12, further comprising a step to check that a Pearson correlation index ($R^2$) is greater than a second predefined minimum threshold ($R\_min^2$).

14. Method according to any one of the preceding claims, wherein said calculation of a linear regression (step 5) and/or said mean squared deviation ($\sigma(\dot{m}_{EGR})$) of said check (CH3) and/or of said Pearson correlation index (R2) are implemented through continuous integration over a suitable time interval [t1, t2].

**Patentansprüche**

1.  Undichtigkeits-/Fehlerfeststellsystem einer Niederdruck-EGR-Schaltung (RL) einer Verbrennungskraftmaschine, wobei die Verbrennungskraftmaschine umfasst:

    - eine Ansaugleitung (IL) und eine Abgasleitung (EL) ,
    - erste Mittel (HFM) zum Messen oder Schätzen einer Menge von Frischluft ($\dot{m}_{HFR)}$, die in die Ansaugleitung (IL) strömt
    - zweite Mittel zum Messen oder Schätzen einer Menge von Kraftstoff ($\dot{m}_{FUEL}$), die in die Maschine (E) eingespritzt wird,
    - dritte Mittel zum Messen oder Schätzen ($\lambda$ und/oder NOx) in der Abgasleitung, die dafür ausgelegt sind, einen Messwert ($\lambda_{measured}$) eines Luft/Kraftstoff-Verhältnisses zu liefern, das der Verbannungskraftmaschine (E) zugeführt wird,

    wobei das System Prozessor-Mittel (ECU) umfasst, die dafür ausgelegt sind, sich mit dem ersten, zweiten und dritten Mittel zum Messen oder Schätzen ($\dot{m}_{HFM}$, $\dot{m}_{FUEL}$, $\lambda_{measured}$) zu verbinden und die folgenden Schritte auszuführen

    - (Schritt 1) Erfassen eines Lambda-Wertes, der am Auslass ($\lambda_{measured}$) durch das dritte Mittel zum Messen oder Schätzen gemessen wird ($\lambda$ und/oder NOx),
    - (Schritt 2) Berechnung eines theoretischen Wertes ($\lambda_{exp}$) des Luft/Kraftstoff-Verhältnisses, berechnet auf der Basis der gemessenen oder geschätzten Mengen von Frischluft ($\dot{m}_{HFM}$) und Kraftstoff ($\dot{m}_{FUEL}$), **gekennzeichnet durch**
    - (Schritt 3) Berechnung eines Fehlers ($\lambda_{err}$) zwischen den gemessenen und theoretischen Werten des Luft/Kraftstoff-Verhältnisses ($\lambda_{measured}$ - $\lambda_{exp}$),
    - (Schritt 4) Berechnung/Schätzung einer Menge/eines Stroms von rückgeführtem Niederdruck-Abgas ($\dot{m}_{EGR}$),
    - (Schritt 5) Berechnung einer linearen Regression zur Menge des rückgeführten Abgases ($\dot{m}_{EGR}$) und des Fehlers ($\lambda_{err}$),
    - (Schritt 6) Signalisieren einer Undichtigkeit/eines Fehlers in der Niederdruck-EGR-Schaltung, wenn ein Winkelkoeffizient (b) der linearen Regression einen vorgegebenen ersten positiven Schwellwert ($b_{max}$) überschreitet.

2.  System nach Anspruch 1, wobei bei Fehlen einer gleichzeitigen Hochdruck-Rückführung der Strom von rückgeführtem Niederdruck-Abgas ($\dot{m}_{EGR,LP}$) durch das Prozessormittel (ECU) berechnet wird, das von einer Gesamtladung, die in die Verbannungsmaschine eintritt ($\dot{m}_a$) die Menge an Frischluft ($\dot{m}_{HFM}$) subtrahiert, die in die Ansaugleitung (IL) einströmt, wobei die Gesamtladung ($\dot{m}_a$), die in die Verbandsmaschine eintritt, eine Funktion der Maschinendrehzahlen, der Verdrängung, des Drucks und der Temperatur ist, die in der Ansaugleitung (IL) gemessen wird.

3.  System nach Anspruch 2, wobei, wenn eine gleichzeitige Hochdruck-Rückführung ausgeführt wird, der Strom von rückgeführtem Niederdruck-Abgas ($\dot{m}_{EGR,LP}$) durch das Prozessormittel (ECU) berechnet wird, wobei von einer Gesamtladung, die in die Verbannungsmaschine eintritt ($\dot{m}_a$), die Menge an Frischluft ($\dot{m}_{HFM}$), die in die Ansaugleitung (IL) strömt, und ein Strom von rückgeführtem Hochdruck-Abgas ($\dot{m}_{EGR,LP}$) subtrahiert wird, wobei die Gesamtladung ($\dot{m}_a$), die in die Verbrennungskraftmaschine eintritt, eine Funktion der Maschinendrehzahlen, Verdrängung, Druck und Temperatur ist, die in der Ansaugleitung (IL) gemessen wird.

4.  System nach einem der Ansprüche 1 - 3, das ferner Mittel zum Überwachen eines Effizienzzustandes in den vorgenannten Mitteln zum Messen oder Schätzen umfasst ($\dot{m}_{HFM}$, $\dot{m}_{FUEL}$, $\lambda_{measured}$) und wobei die Prozessormittel ferner dafür ausgelegt sind, zumindest die Ausführung des Signalisierungsschrittes (Schritt 6) zu hemmen, wenn mindestens ein Fehler der Mittel zum Messen oder Schätzen festgestellt wird.

5.  System nach einem der vorherigen Ansprüche, wobei die Prozessormittel ferner dafür ausgelegt sind, mindestens eine der folgenden Kontrollen auszuführen

    - (CH2) Kontrollieren, dass eine Gesamtmasse (M_EGR) von rückgeführtem Niederdruck-Abgas, beginnend beim letzten Motorstart und während der Ausführung des vorliegenden Verfahrens, größer als ein dritter vorgegebener Schwellwert (M_EGR_min) ist;
- (CH3) Kontrollieren, dass eine mittlere quadratische Abweichung ($\sigma(\dot{m}_{EGR})$) der Menge des rückgeführtem Niederdruck-Abgases ($\dot{m}_{EGR}$) größer als ein vierter vorgegebener Schwellwert ist ($\sigma(\dot{m}\_EGR)\__{min}$)

und dafür ausgelegt ist, eine Ausführung des Signalisierungsschrittes (Schritt 6) zu verhindern, wenn mindestens eine der Kontrollen (CH2, CH3) nicht erfüllt ist.

6. System nach einem der vorherigen Ansprüche, wobei die Prozessormittel ferner dafür ausgelegt sind, einen Schritt zum Kontrollieren auszuführen, dass ein Pearson-Korrelationsindex ($R^2$) zwischen dem Strom von Niederdruck-EGR ($\dot{m}_{EGR,LP}$) und dem Lambda-Fehler ($\lambda_{err}$) größer als ein zweiter vorgegebener minimaler Schwellwert ($R\_min^2$) ist.

7. Verbrennungskraftmaschine, insbesondere ein Dieselmotor, umfassend

- einen Niederdruck-EGR-Kreislauf (RL),
- eine Ansaugleitung (IL) und eine Abgasleitung (EL),
- Mittel (HFM) zum Messen oder Schätzen einer Menge von Frischluft ($\dot{m}_{HFM}$), die in die Ansaugleitung (IL) strömt,
- Mittel zum Messen oder Schätzen einer Menge von Kraftstoff ($\dot{m}_{FUEL}$), die in den Motor (E) eingespritzt wird,
- Mittel zum Messen oder Schätzen ($\lambda$ und/oder NOx), in der Abgasleitung, das dafür ausgelegt ist, einen ersten Wert ($\lambda_{measured}$) eines Luft/Kraftstoff-Verhältnisses zu liefern, das der Verbrennungskraftmaschine (E) zugeführt wird,
- **dadurch gekennzeichnet, dass** ein Undichtigkeits-/Fehler-Feststellungssystem des Niederdruck-EGR-Kreislaufs (RL) nach einem der Ansprüche 1 bis 6 vorhanden ist.

8. Verfahren zum Feststellen einer Undichtigkeit/eines Fehlers eines Feststellungssystems eines Niederdruck-EGR-Kreislaufs (RL) einer Verbrennungskraftmaschine, wobei das Verfahren die folgenden Schritte umfasst

- (Schritt 1) Erfassen eines Lambda-Wertes, gemessen am Auspuff ($\lambda_{measured}$) durch das dritte Mess- oder Schätzmittel ($\lambda$ und/oder NOx),
- (Schritt 2) Berechnung eines theoretischen Wertes ($\lambda_{exp}$) des Luft/Kraftstoff-Verhältnisses, berechnet auf der Basis der gemessenen oder geschätzten Menge an Frischluft ($\dot{m}_{HFM}$) und Kraftstoff ($\dot{m}_{FUEL}$)
- (Schritt 3) Berechnung eines Fehlers ($\lambda_{err}$) zwischen dem gemessenen und theoretischen Wert des Luft/Kraftstoff-Verhältnisses ($\lambda_{measured}$ - $\lambda_{exp}$),
- (Schritt 4) Berechnung/Schätzung einer Menge/eines Stroms von rückgeführtem Niederdruck-Abgas ($\dot{m}_{EGR}$),
- (Schritt 5) Berechnung der linearen Regression für die Menge von rückgeführtem Abgas ($\dot{m}_{EGR}$) und den Fehler ($\lambda_{err}$),
- (Schritt 6) Signalisierung einer Undichtigkeit/eines Fehlers im Niederdruck-EGR-Kreislauf, wenn ein Winkelkoeffizient (b) der linearen Regression einen vorgegebenen ersten positiven Schwellwert ($b_{max}$) übersteigt.

9. Verfahren nach Anspruch 8, wobei, bei Fehlen der gleichzeitigen Hochdruck-Rückführung, die Menge des rückgeführten Niederdruck-Abgases ($\dot{m}_{EGR}$) berechnet wird, indem von einer Gesamtladung, die in die Verbannungsmaschine eintritt ($\dot{m}_a$), die Menge an Frischluft ($\dot{m}_{HFM}$) subtrahiert wird, die in die Ansaugleitung (IL) einströmt, wobei die Gesamtladung ($\dot{m}_a$), die in die Verbannungsmaschine eintritt, eine Funktion der Maschinendrehzahlen, Verdrängung, Druck und Temperatur ist, die in der Ansaugleitung (IL) gemessen wird.

10. Verfahren nach Anspruch 9, wobei, wenn eine gleichzeitige Hochdruck-Rückführung vorgenommen wird, der Strom des rückgeführten Niederdruck-Abgases ($\dot{m}_{EGR,LP}$) durch das Prozessormittel (ECU) berechnet wird, das von einer Gesamtladung, die in die Verbrennungskraftmaschine eintritt ($\dot{m}_a$), die Menge an Frischluft ($\dot{m}_{HFM}$), die in die Ansaugleitung (IL) einströmt, und einen Strom von rückgeführtem Hochdruck-Abgas ($\dot{m}_{EGR,HP}$) subtrahiert, wobei die Gesamtladung ($\dot{m}_a$), die in die Verbrennungskraftmaschine eintritt, eine Funktion von Maschinendrehzahlen, Verdrängung, Druck und Temperatur ist, die in der Ansaugleitung (IL) gemessen wird.

11. Verfahren nach einem der Ansprüche 8 - 10, das ferner einen Schritt des Überwachens eines Effizienzzustandes in den vorgenannten Mitteln zum Messen oder Schätzen ($\dot{m}_{HFM}$, $\dot{m}_{FUEL}$, $\lambda_{measured}$) und des Verhinderns von zumindest der Ausführung des Signalisierungsschrittes (Schritt 6) umfasst, wenn mindestens ein Fehler in einem der Mittel zum Messen oder Schätzen festgestellt wird.

12. Verfahren nach einem der vorherigen Ansprüche 8 - 11, das ferner mindestens eine der folgenden Kontrollen umfasst

- (CH2) Kontrollieren, dass eine gesamte rückgeführte Niederdruck-Masse (M_EGR), beginnend bei dem letzten Maschinenstart und während der Ausführung des vorliegenden Verfahrens, größer als eine dritte vorgegebene Schwelle (M_EGR_min) ist;
- (CH3) checking that a mean squared deviation ($\sigma(\dot{m}_{EGR})$) of said quantity of recirculated low pressure exhaust gas ($\dot{m}_{EGR}$) is greater than a fourth predefined threshold ($\sigma(\dot{m}_{EGR})$_min)
- und ein Schritt zur Verhinderung einer Ausführung des Schritts für die Berechnung der linearen Regression (Schritt 5) und/oder des Signalisierungsschritts (Schritt 6), wenn mindestens eine der Kontrollen nicht erfüllt ist.

**13.** Verfahren nach einem der vorherigen Ansprüche 8 - 12, das ferner einen Schritt zur Kontrolle umfasst, dass ein Pearson-Korrelationsindex ($R^2$) größer als eine zweite vorgegebene Mindestschwelle ($R\_min^2$) ist.

**14.** Verfahren nach einem der vorherigen Ansprüche, wobei die Berechnung einer linearen Regression (Schritt 5) und/oder der mittleren quadratischen Abweichung ($\sigma(\dot{m}_{EGR})$) der Kontrolle (CH3) und/oder des Pearson-Korrelationsindexes ($R^2$) durch kontinuierliche Integration über ein geeignetes Zeitintervall [t1, t2] implementiert wird.

## Revendications

**1.** Système de détection de fuite/défaut d'un circuit d'EGR basse pression (RL) d'un moteur à combustion interne, le moteur à combustion interne comprenant :

- une conduite d'admission (IL) et une conduite d'échappement (EL),
- des premiers moyens (HFM) pour mesurer ou estimer une quantité d'air frais ($\dot{m}_{HFM}$) s'écoulant dans ladite conduite d'admission (IL),
- des deuxièmes moyens pour mesurer ou estimer une quantité de carburant ($\dot{m}_{FUEL}$) injectée dans le moteur à combustion interne (E),
- des troisièmes moyens pour mesurer ou estimer ($\lambda$ et/ou NOx), sur ladite conduite d'échappement, conçus pour fournir une valeur mesurée ($\lambda_{measured}$) d'un rapport air/carburant fourni au moteur à combustion interne (E),

le système comprenant des moyens formant processeur (ECU) configurés pour s'interfacer avec les premiers, deuxièmes et troisièmes moyens susmentionnés pour mesurer ou estimer ($\dot{m}_{HFM}$, $\dot{m}_{FUEL}$, $\lambda_{measured}$) et pour effectuer les étapes suivantes :

- (étape 1) d'acquisition d'une valeur lambda mesurée au niveau de l'échappement ($\lambda_{measured}$) par l'intermédiaire desdits troisième moyens pour mesurer ou estimer ($\lambda$ et/ou NOx),
- (étape 2) de calcul d'une valeur théorique ($\lambda_{exp}$) dudit rapport air/carburant, calculée sur la base desdites quantités mesurées ou estimées d'air frais ($\dot{m}_{HFM}$) et de carburant ($\dot{m}_{FUEL}$), **caractérisé par**,
- (étape 3) le calcul d'une erreur ($\lambda_{err}$) entre lesdites valeurs mesurée et théorique du rapport air/carburant ($\lambda_{measured}$ - $\lambda_{exp}$),
- (étape 4) le calcul/l'estimation d'une quantité/d'un écoulement de gaz d'échappement basse pression de recirculation ($\dot{m}_{EGR}$),
- (étape 5) le calcul d'une régression linéaire sur ladite quantité de gaz d'échappement de recirculation ($\dot{m}_{EGR}$) et ladite erreur ($\lambda_{err}$),
- (étape 6) la signalisation d'une fuite/d'un défaut sur ledit circuit d'EGR basse pression lorsqu'un coefficient angulaire (b) de ladite régression linéaire dépasse un premier seuil positif ($b_{max}$) prédéfini.

**2.** Système selon la revendication 1, dans lequel, en l'absence d'une recirculation haute pression simultanée, ledit écoulement de gaz d'échappement basse pression de recirculation ($\dot{m}_{EGR,LP}$) est calculé par lesdits moyens formant processeur (ECU) en soustrayant d'une charge totale entrant dans le moteur à combustion interne ($\dot{m}_a$) ladite quantité d'air frais ($\dot{m}_{HFM}$) s'écoulant dans ladite conduite d'admission (IL), dans lequel ladite charge totale ($\dot{m}_a$) entrant dans le moteur à combustion interne est fonction du nombre de rotations, de la cylindrée, de la pression et de la température mesurée dans ladite conduite d'admission (IL) du moteur à combustion interne.

**3.** Système selon la revendication 2, dans lequel, si une recirculation haute pression simultanée est effectuée, ledit écoulement de gaz d'échappement basse pression de recirculation ($\dot{m}_{EGR,LP}$) est calculé par lesdits moyens formant processeur (ECU) en soustrayant d'une charge totale entrant dans le moteur à combustion interne ($\dot{m}_a$) ladite quantité d'air frais ($\dot{m}_{HFM}$) s'écoulant dans ladite conduite d'admission (IL) et un écoulement de gaz d'échappement haute pression de recirculation ($\dot{m}_{EGR,HP}$), dans lequel ladite charge totale ($\dot{m}_a$) entrant dans le moteur à combustion interne est fonction du nombre de rotations, de la cylindrée, de la pression et de la température mesurée dans ladite conduite d'admission (IL) du moteur à combustion interne.

4. Système selon l'une quelconque des revendications 1 à 3, comprenant en outre des moyens pour surveiller un état de rendement dans les moyens susmentionnés pour mesurer ou estimer ($\dot{m}_{HFM}$, $\dot{m}_{FUEL}$, $\lambda_{measured}$) et dans lequel lesdits moyens formant processeur sont en outre configurés pour interdire au moins l'exécution de ladite étape de signalisation (étape 6), lorsqu'au moins une erreur sur l'un desdits moyens pour mesurer ou estimer est détectée.

5. Système selon l'une quelconque des revendications précédentes, dans lequel lesdits moyens formant processeur sont en outre configurés pour effectuer au moins l'une des vérifications suivantes :

   - (CH2) la vérification qu'une masse totale (M_EGR) de gaz d'échappement basse pression de recirculation depuis le dernier démarrage du moteur à combustion interne et pendant l'exécution du présent procédé est supérieure à un troisième seuil (M_EGR_min) prédéfini ;
   - (CH3) la vérification qu'une erreur quadratique moyenne ($\sigma(\dot{m}_{EGR})$) de ladite quantité de gaz d'échappement basse pression de recirculation ($\dot{m}_{EGR}$) est supérieure à un quatrième seuil ($\sigma(\dot{m}_{EGR})$_min) prédéfini,

   et configurés pour interdire une exécution de ladite étape de signalisation (étape 6) lorsque ladite au moins une desdites vérifications (CH2, CH3) n'est pas satisfaite.

6. Système selon l'une quelconque des revendications précédentes, dans lequel lesdits moyens formant processeur sont en outre configurés pour effectuer une étape pour vérifier qu'un indice de corrélation de Pearson ($R^2$) entre l'écoulement d'EGR basse pression ($\dot{m}_{EGR,LP}$) et l'erreur lambda ($\lambda_{err}$) est supérieur à un deuxième seuil minimum ($R\_min^2$) prédéfini.

7. Moteur à combustion interne, en particulier un moteur à combustion interne à cycle diesel, comprenant :

   - un circuit d'EGR basse pression (RL),
   - une conduite d'admission (IL) et une conduite d'échappement (EL),
   - des moyens (HFM) pour mesurer ou estimer une quantité d'air frais ($\dot{m}_{HFM}$) s'écoulant dans ladite conduite d'admission (IL),
   - des moyens pour mesurer ou estimer une quantité de carburant ($\dot{m}_{FUEL}$) injectée dans le moteur à combustion interne (E),
   - des moyens pour mesurer ou estimer ($\lambda$ et/ou NOx), sur ladite conduite d'échappement, conçus pour fournir une première valeur ($\lambda_{measured}$) d'un rapport air/carburant fourni au moteur à combustion interne (E),

   **caractérisé en ce qu'**il comprend un système de détection de fuite/défaut dudit circuit d'EGR basse pression (RL) selon l'une quelconque des revendications 1 à 6.

8. Procédé pour détecter une fuite/un défaut d'un système de détection d'un circuit d'EGR basse pression (RL) d'un moteur à combustion interne, le procédé comprenant les étapes suivantes :

   - (étape 1) d'acquisition d'une valeur lambda mesurée au niveau de l'échappement ($\lambda_{measured}$) par l'intermédiaire desdits troisième moyens pour mesurer ou estimer ($\lambda$ et/ou NOx),
   - (étape 2) de calcul d'une valeur théorique ($\lambda_{exp}$) dudit rapport air/carburant, calculée sur la base desdites quantités mesurées ou estimées d'air frais ($\dot{m}_{HFM}$) et de carburant ($\dot{m}_{FUEL}$),
   - (étape 3) de calcul d'une erreur ($\lambda_{err}$) entre lesdites valeurs mesurée et théorique du rapport air/carburant ($\lambda_{measured}$-$\lambda_{exp}$),
   - (étape 4) de calcul/d'estimation d'une quantité/d'un écoulement de gaz d'échappement basse pression de recirculation ($\dot{m}_{EGR}$),
   - (étape 5) de calcul d'une régression linéaire sur ladite quantité de gaz d'échappement de recirculation ($\dot{m}_{EGR}$) et ladite erreur ($\lambda_{err}$),
   - (étape 6) de signalisation d'une fuite/d'un défaut sur ledit circuit d'EGR basse pression lorsqu'un coefficient angulaire (b) de ladite régression linéaire dépasse un premier seuil positif ($b_{max}$) prédéfini.

9. Procédé selon la revendication 8, dans lequel, en l'absence d'une recirculation haute pression simultanée, ladite quantité de gaz d'échappement basse pression de recirculation ($\dot{m}_{EGR}$) est calculée en soustrayant d'une charge totale entrant dans le moteur à combustion interne ($\dot{m}_a$) ladite quantité d'air frais ($\dot{m}_{HFM}$) s'écoulant dans ladite conduite d'admission (IL), dans lequel ladite charge totale ($\dot{m}_a$) entrant dans le moteur à combustion interne est fonction du nombre de rotations, de la cylindrée, de la pression et de la température mesurée dans ladite conduite d'admission (IL) du moteur à combustion interne.

10. Procédé selon la revendication 9, dans lequel, si une recirculation haute pression simultanée est effectuée, ledit écoulement de gaz d'échappement basse pression de recirculation ($\dot{m}_{EGR,LP}$) est calculé par lesdits moyens formant processeur (ECU) en soustrayant d'une charge totale entrant dans le moteur à combustion interne ($\dot{m}_a$) ladite quantité d'air frais ($\dot{m}_{HFM}$) s'écoulant dans ladite conduite d'admission (IL) et un écoulement de gaz d'échappement haute pression de recirculation ($\dot{m}_{EGR,HP}$), dans lequel ladite charge totale ($\dot{m}_a$), dans le moteur à combustion interne est fonction du nombre de rotations, de la cylindrée, de la pression et de la température mesurée dans ladite conduite d'admission (IL) du moteur à combustion interne.

11. Procédé selon l'une quelconque des revendications 8 à 10, comprenant en outre une étape de surveillance d'un état de rendement dans les moyens susmentionnés pour mesurer ou estimer ($\dot{m}_{HFM}$, $\dot{m}_{FUEL}$, $\lambda_{measured}$) et d'interdiction au moins de l'exécution de ladite étape de signalisation (étape 6), lorsqu'au moins une erreur sur l'un desdits moyens pour mesurer ou estimer est détectée.

12. Procédé selon l'une quelconque des revendications 8 à 11 précédentes, comprenant en outre au moins l'une des vérifications suivantes :

- (CH2) la vérification qu'une masse totale (M_EGR) de gaz d'échappement basse pression de recirculation depuis le dernier démarrage du moteur à combustion interne et pendant l'exécution du présent procédé est supérieure à un troisième seuil (M_EGR_min) prédéfini ;
- (CH3) la vérification qu'une erreur quadratique moyenne ($\sigma(\dot{m}_{EGR})$) de ladite quantité de gaz d'échappement basse pression de recirculation ($\dot{m}_{EGR}$) est supérieure à un quatrième seuil ($\sigma(\dot{m}_{EGR})$_min) prédéfini,

et une étape pour interdire une exécution de ladite étape pour calculer ladite régression linéaire (étape 5) et/ou ladite étape de signalisation (étape 6) lorsque ladite au moins une desdites vérifications n'est pas satisfaite.

13. Procédé selon l'une quelconque des revendications 8 à 12 précédentes, comprenant en outre une étape pour vérifier qu'un indice de corrélation de Pearson ($R^2$) est supérieur à un deuxième seuil minimum ($R\_min^2$) prédéfini.

14. Procédé selon l'une quelconque des revendications précédentes, dans lequel lesdits calculs d'une régression linéaire (étape 5) et/ou de ladite erreur quadratique moyenne de ladite vérification (CH3) et/ou dudit indice de corrélation de Pearson ($R^2$) sont effectués par une intégration continue sur un intervalle de temps [t1, t2] approprié.

Fig. 1

EP 3 227 544 B1

Fig. 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2728150 A1
- US 2012138027 A
- EP 2728150 A